**Europäisches Patentamt**

**European Patent Office**

**Office européen des brevets**

(19)

(11) Veröffentlichungsnummer: **0 172 304**
**B1**

(12) EUROPÄISCHE PATENTSCHRIFT

(45) Veröffentlichungstag der Patentschrift: **27.06.90**

(21) Anmeldenummer: **85102226.9**

(22) Anmeldetag: **28.02.85**

(51) Int. Cl.⁵: **B 05 C 3/02**, B 22 F 3/26, B 22 D 31/00, B 27 K 3/15, C 04 B 41/45

(54) Vorrichtung zum Imprägnieren poröser Teile.

(30) Priorität: **25.05.84 DE 3419521**

(43) Veröffentlichungstag der Anmeldung:
**26.02.86 Patentblatt 86/09**

(45) Bekanntmachung des Hinweises auf die Patenterteilung:
**27.06.90 Patentblatt 90/26**

(84) Benannte Vertragsstaaten:
**AT BE CH DE FR GB IT LI LU NL SE**

(56) Entgegenhaltungen:
**FR-A-2 400 966**
**FR-A-2 484 871**
**US-A-2 419 260**
**US-A-3 659 550**

(73) Patentinhaber: **Ing. Hubert Maldaner GmbH Max-Planck-Ring 3 D-4018 Langenfeld (DE)**

(72) Erfinder: **Tölke, Fritz Volksgartenstrasse 23 D-4018 Langenfeld (DE)**

(74) Vertreter: **Gille, Christian, Dipl.-Ing. et al Türk, Gille + Hrabal Patentanwälte Bruckner Strasse 20 D-4000 Düsseldorf 13 (DE)**

Courier Press, Leamington Spa, England.

## Beschreibung

Die Erfindung betrifft eine Vorrichtung zum Imprägnieren poröser Teile, mit den Merkmalen des Überbegriffes des Patentanspruches 1.

Es ist bekannt, poröse Teile wie Guß- oder Sintermetalle, aber auch Keramik- und Kohlenstoffpreßteile mit Kunststoff zu imprägnieren, um die Poren und feinen Risse zu verschließen und dadurch eine glatte und dichte Oberfläche zu erzielen. Die Teile werden dabei in eine Imprägnierflüssigkeit eingetaucht, wobei je nach Beschaffenheit der Imprägnierflüssigkeit diese, unter Erzeugung von Vakuum, in die Poren und feinen Risse eindreingt oder Druck aufgebracht wird, um die Imprägnierflüssigkeit in die Poren und freinen Risse hineinzutreiben, wo sie aushärten kann, beispielsweise durch Polymerisieren. Nach dem Imprägnieren der Teile wird deren Oberfläche von Resten der Imprägnierflüssigkeit befreit, beispielsweise durch einen anschließenden Waschvorgang.

Es ist bekannt, die sauberen und fettfreien zu imprägnierenden Teile innerhalb eines Korbes in einen dicht zu verschließenden Behälter einzugeben und diesen Behälter dann zu evakuieren, um die Luft aus den porösen Stellen der zu behandelnden Teile herauszusaugen. Dann wird flüssiges Imprägniermittel aus einem Lagertank in den Behandlungsbehälter eingelassen, das aufgrund des dort herrschenden Unterdruckes angesaugt wird und in die Poren und feinen Risse der Teile eindringt. Es kann auch auf die Oberfläche des Imprägniermittels Druckluft aufgegeben werden, wodurch das Imprägniermittel tiefer in die Poren und feinen Verästelungen der porösen Stellen der Teile gepreßt wird. Dann wird der Behälter entlüftet und das Imprägniermittel wieder in den Lagertank zurückgeleitet, woraufhin man den Korb mit den imprägnierten Teilen herausnimmt und in einem Waschbehälter spült, so daß an der Oberfläche anhaftende Imprägniermittelreste vollständig entfernt werden und auch kein Oberflächenfilm des Imprägniermittels zurückbleibt. Schließlich werden die Teile mit dem Korb in ein Polymerisationsbad eingesetzt, in welchem das in den Poren und feinen Rissen befindliche Imprägniermittel aushärtet und ein "Ausbluten" des Imprägniermittels aus den Poren und Rissen auf diese Weise verhindert wird.

Da für diese Arbeitsweise drei Behälter erforderlich sind, nämlich der eigentliche Behandlungsbehälter oder Imprägnierkessel, ein Lagertank für das flüssige Imprägniermittel sowie eine Zentrifuge, ist die Vorrichtung verhältnismäßig aufwendig und benötigt verhältnismäßig viel Platz. Auch ist es umständlich, das Imprägniermittel ständig zwischen dem Imprägnierkessel und dem Lagertank hin- und herzufördern.

Aus der US—A—2 418 260 ist eine Vorrichtung zum Imprägnieren poröser Teile mittels eines flüssigen Imprägniermittels bekannt, bei der ein Behälter für das Imprägniermittel, ein die zu imprägnierenden Teile aufnehmender, eine durchlässige Wandung aufweisender Korb, eine drehbar abgestütze Zentrifuge und ein sich im unteren Teil des Behälters befindliches anhebbares Becken für das Imprägniermittel vorgesehen ist. Hierbei besteht jedoch die Gefahr, daß aufgrund der Ausgestaltung der Zentrifuge diese im Einsatz dazu neigt, unerwünschte Taumelbewegungen, hervorgerufen durch eine exzentrische Anordnung der zu imprägnierenden porösen Teile, oder aber durch eine Unwucht der Zentrifuge, hervorgerufen z. B. durch Imprägnierreste, auszuführen. Dadurch besteht zum einen die Gefahr einer Verlagerung der zu imprägnierenden Teile innerhalb der Zentrifuge und zum anderen die Gefahr einer Beschädigung des Antriebes bzw. der Lagerteile der Zentrifuge, so daß mit einem erhöhten Wartungsaufwand bzw. einer erhöhten Störanfälligkeit gerechnet werden muß.

Die FR—A—2 484 871 lehrt, den Korb im Inneren des drehbar angeordneten Käfigs zu halten; die Verwendung dieses Käfigs soll das Beladen des Korbes erleichtern. Der Käfig tritt dabei funktionsmäßig an die Stelle einer drehbaren Welle.

Der Erfindung liegt die Aufgabe zugrunde, eine einfachere und wirkungvolle, d.h. eine störunanfällige und damit wartungsfreundliche und betriebssicher arbeitende Vorrichtung zum Imprägnieren poröser Teile zu schaffen.

Diese Aufgabe wird bei einer erfindungsgemäßen Vorrichtung der eingangs genannten Gattung mit den Merkmalen des kennzeichnenden Teiles des Patentanspruches 1 gelöst. Weitere vorteilhafte Ausgestaltungen der Erfindung sind Gegenstand der Unteransprüche.

Dadurch, daß der Korb im oberen Teil des dicht verschließbaren Behälters in eine drehbare Korbaufnahmevorrichtung abgesetzt wird, ist zum einen ein schneller Austausch des Korbes und damit ein hoher Auslastungsgrad der Vorrichtung gewährleistet, da bei der vorliegenden Vorrichtung mehrer Körbe zum Einsatz gelangen können, und zum anderen wird gewährleistet, daß der die zu imprägnierenden Teile aufnehmende Korb derart gelagert ist, daß sich beim Drehen der Zentrifuge keine Taumelbewegung aufgrund einer exzentrischen Anordnung, z. B. der zu imprägnierenden Teile oder einer Unwucht, einstellen kann. Vielmehr ist ein äußerst ruhiger lauf gewährleistet.

Ist im oberen Teil des Behälters ein Käfig befestigt der am unteren Ende ein Stehlager für die Zentrifuge enthält, und ist im aufklappbaren Deckel des Behälters ein Antrieb für die Zentrifuge gelagert, so stellt dies eine besonders betriebssichere und zuverlässige Ausgestaltung dar Zentrifuge bzw. deren Lager und dessen Antrieb der. Desweiteren ist dadurch gewährleistet, daß durch den für die Korbaufnahme ausgestalteten Käfig eine problemlose Aufnahme des Korbes möglich ist und der Antrieb beim Schließen des Deckels auf die Oberseite des Korbes aufsetzt und dadurch an diesen angekuppelt wird. An diesen Antrieb kann ein Motor (Luftmotor) wie ein Elektromotor angeschlossen werden.

Weist der Antrieb für die Zentrifuge einen auf die Oberseite der korbartigen Zentrifuge aufsetzbaren, um eine etwa senkrechte Achse drehbar anzutreibenden Mitnehmer auf, so stellt dies eine einfache aber umso wirkungsvollere Ausgestaltung einer Verbindung zwischen Antrieb und Zentrifuge der, d.h. es ist dadurch eine einfache, wirkungsvolle und wartungsarme Kupplung geschaffen.

Das Becken für das flüssige Imprägniermittel kann mit Hilfe eines Zylinders, wie eines hydraulischen oder pneumatischen Zylinders, angehoben und abgesenkt werden.

Weist das anhebbare Becken am unteren Ende ein als Rückschlagventil ausgebildetes Einlaßventil auf, so ist es dadurch möglich, im Behandlungsbehälter außerhalb des Beckens nach unten laufende Flüssigkeit in das Becken zurückzuführen, so daß das Becken nicht an der Innenwand des Behandlungsbehälters anzuliegen braucht. Vielmehr kann zwischen dem Becken und der Wand des Behälters ein größerer Abstand vorhanden sein. Das von der Zentrifuge abgeschleuderte flüssige Imprägniermittel läuft daher in der Innenwand des Behandlungsbehälters nach unten und sammelt sich am Boden des Behandlungsbehälters außerhalb des anhebbaren Beckens. Hat sich im Behälter eine derartige Menge Imprägniermittel angesammelt, daß der Flüssigkeitsspiegel höher als der Flüssigkeitsspiegel innerhalb des abgesenkten Beckens steht, öffnet sich das Rückschlagventil, das ein Klappenventil sein kann, und läßt Imprägniermittel einströmen bis ein Niveauausgleich erfolgt ist.

Das Rückschalgventil wird beim Anheben des Beckens aufgrund des Flüssigkeitsdruckes selbsttätig geschlossen, so daß aus dem angehobenen Becken keine Flüssigkeit durch das Rückschlagventil ausströmen kann.

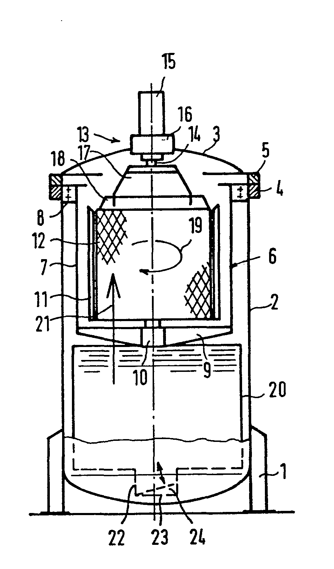

In der Zeichnung ist schematisch ein Ausführungsbeispiel einer erfindungsgemäßen Vorrichtung zum Imprägnieren poröser Teile in einem senkrechten Schnitt dargestellt.

Die Vorrichtung weist einen auf Füßen 1 abgestützten aufrechtstehenden zylindrischen kesselartigen Behälter 2 mit aufklappbarem Deckel 3 auf. Der Behälter 2 ist am oberen Ende mit einem umlaufenden Flansch 4 und der Deckel 3 mit einem entsprechenden Flansch 5 versehen, so daß mit Hilfe von nicht im einzelnen dargestellten Dichtungen der Deckel 3 vakuumdicht bzw. druckdicht auf den Behälter 2 aufgesetzt und damit die Vorrichtung vakuumdicht bzw. druckdicht verschlossen werden kann.

Im oberen Bereich des Behälters 2 ist ein offener Kafig 6 angeordnet, dessen senkrechte Streben 7 mittels Konsolen 8 an der Innenseite des Behälters 2 befestigt sind. Die unteren Enden der Streben 7, von denen wenigstens drei vorgesehen sind, sind mittels einer Traverse 9 miteinander verbunden. In der Mitte der Traverse 9 ist ein Stehlager 10 für eine innerhalb des Käfigs 6 drehbare Zentrifuge 11 vorgesehen. Die Zentrifuge 11 besteht aus einem nach oben offenen Gestell und dient zur Aufnahme eines Korbes 12, in dem sich die zu imprägnierenden porösen Teile befinden.

Im Deckel 3 ist ein Antrieb 13 für die Zentrifuge 11 gelagert. Dieser Antrieb besteht im wesentlichen aus einer Welle 14, die am äußeren Ende eine Kapplung zum Anschließen eines Motors 15 aufweist. Diese Welle ist in einem vakuumdichten bzw. druckdichten Lager 16 drehbar gelagert, das in den Deckel 3 eingelassen ist.

Am unteren Ende der Welle 14 befindet sich ein pratzenartiger Mitnehmer 17, der bei geschlossenem Deckel 3 einen Bügel 18 erfaßt, welcher sich auf der Oberseite des Korbes 12 befindet.

Das Gestell 11 und der Korb 12 bilden gemeinsam die vom Antrieb 13 zu drehende Zentrifuge. Befindet sich der Korb 12 im Gestell 11 und ist der Deckel 3 geschlossen, kann der Korb 12 gedreht werden, wie durch einen Pfeil 19 angedeutet ist. Der Korb 12 kann dabei keine Taumelbewegungen ausführen, da er mittels des Stehlagers 10 gelagert ist.

Im unteren Teil des Behälters 2 befindet sich ein Becken 20 zur Aufnahme von flüssigem Imprägniermittel, das, wie durch einen Pfeil 21 angedeutet, angehoben werden kann, so daß der Korb 12 in das im Becken 20 befindliche Imprägniermittel eintaucht. Das Becken 20 ist zu diesem Zweck an einen oder mehreren, nicht dargestellten Arbeitszylindern angehängt, welche das Anheben und Absenken besorgen. Diese Arbeitszylinder befinden sich vorzugsweise außerhalb des Behälters 2 und sind über vakuumdichte bzw. druckdichte Einlässe mit dem im Inneren des Behälters 2 befindlichen Becken 20 verbunden.

Am unteren Ende des Beckens 20 befindet sich in einem stutzenartigen Ansatz 22 eine Einlaßöffnung 23, durch die sich im Behälter 2 außerhalb des Beckens 20 ansammelnde Imprägniermittel-Flüssigkeit in das Becken 20 einströmen kann. Die Öffnung 23 ist jedoch mit einem Klappenventil 24 versehen, das vom Druck des im Becken 20 befindlichen Imprägniermittels geschlossen wird, wenn dieser Druck höher als der Druck des außerhalb des Beckens 20 befindlichen Imprägniermittels ist. Somit ist gewährleistet, daß in der in der Zeichnung dargestellten abgesenkten Position des Beckens 20 Imprägniermittel in dasselbe nachfließen kann, aber kein Imprägniermittel aus dem Becken 20 ausfließt, wenn dasselbe angehoben wird.

Mit der beschriebenen Vorrichtung ist es möglich, die zum Imprägnieren poröser Teile erforderlichen Verfahrensschritte mit einem einzigen Behälter durchzuführen, weil dieser Behälter nicht nur die zu imprägnierenden Teile aufnimmt, sondern auch das Imprägniermittel. Nach dem Imprägnieren kann die Oberfläche der imprägnierten Teil, von Imprägniermittelresten durch Zentrifugieren befreit werden, bevor sich ein Waschvorgang anschließt.

**Patentansprüche**

1. Vorrichtung zum Imprägnieren poröser Teile, insbesondere Guß- oder Sintermetallteile, mittels eines flüssigen Imprägniermittels, auch Kunstharz, mit einem sich im unteren Teil des Behälters

EP 0 172 304 B1

(2) befindlichen anhebbaren Becken (20) für das Imprägniermittel, mit einem die zu imprägnierenden Teile aufnehmenden, eine durchlässige Wandung aufweisenden Korb (12) und mit einer drehbar abestützten Zentrifuge (11, 12), dadurch gekennzeichnet, daß der Korb (12) im oberen Teil des dicht verschließbaren Behälters (2) in eine drehbare Korbaufnahmevorrichtung (11) absetzbar ist und mit dieser gemeinsam die Zentrifuge (11, 12) bildet, daß im oberen Teil des Behälters (2) ein die Zentrifuge (11, 12) umschließender Käfig (6) befestigt ist, der am unteren Ende (9) ein Stehlager (10) für die Zentrifuge (11, 12) enthält, und daß im aufklappbaren Deckel (3) des Behälters (2) ein Antrieb (13) für die Zentrifuge (11, 12) gelagert ist.

2. Vorrichtung nach Anspruch 1, dadurch gekennzeichnet, daß der Antrieb (13) für die Zentrifuge (11, 12) einen auf die Oberseite (18) der korbartigen Zentrifuge (11, 12) aufsetzbaren, um eine etwa senkrechte Achse drehbar anzutreibenden Mitnehmer (17) aufweist.

3. Vorrichtung nach Anspruch 1 oder 2, dadurch gekennzeichnet, daß das anhebbare Becken (20) am unteren Ende (22) ein als Rückschlagventil ausgebildetes Einlaßventil (24) aufweist.

4. Vorrichtung nach Anspruch 3, dadurch gekennzeichnet, daß das Einlaßventil ein Klappenventil (24) ist.

## Revendications

1. Dispositif pour imprégner des pièces poreuses, notamment de pièces métalliques coulées ou frittées, au moyen d'un milieu d'imprégnation liquide, ou encore d'une matière plastique, comprenant une cuvette (20) relevable qui se trouve dans la partie inférieure du récipient (2) et sert à contenir le milieu d'imprégnation, un panier (12) à paroi perméable destiné à recevoir les pièces à imprégner et une centrifugeuse (11, 12) montée rotative, caractérisé en ce, que le panier (12) peut être déposé, dans la partie haute du récipient (2) pouvant se fermer à joint étanche, dans un dispositif rotatif récepteur de panier (11) et forme la centrifugeuse (11, 12) en combinaison avec ce dernier en ce que, dans la partie haute du récipient (2), est fixée une cage (6) qui entoure la centrifugeuse (11, 12) et qui comprend à son extrémité inférieure un palier (10) pour la centrifugeuse (11, 12), et en ce que, dans le couvercle relevable (3) du récipient (2), est monté un dispositif d'entraînement (13) pour la centrifugeuse (11, 12).

2. Dispositif selon la revendication 1, caractérisé en ce que le dispositif d'entraînement (13) de la centrifugeuse (11, 12) présente un entraîneur (13) apte à être entraîné en rotation autour d'un axe à peu près vertical et qui peut être posé sur la face supérieure (18) de la centrifugeuse (11, 12) en forme de panier.

3. Dispositif selon la revendication 1 ou 2, caractérisé en ce que la ouvette relevable (20) présente à son extrémité inférieure (22) une soupape d'entrée (24) formant un clapet anti-retour.

4. Dispositif selon la revendication 3, caractérisé en ce que la soupape d'entrée est une soupape à clapet (24).

## Claims

1. Apparatus for impregnating porous articles, in particular cast or sintered metal articles, by means of a liquid impregnating medium, also synthetic resin, with a vessel (20), which can be lifted, for the impregnating medium and present in a lower part of the container (2), with a basket (12) having a permeable wall and receiving the articles to be impregnated and with a rotatably mounted centrifuge (11, 12), characterised in that the basket (12) is mounted in the upper part of the tightly sealable container (2) in a rotatable basket receiving device (11) and forms in common with it the centrifuge (11, 12), that there is secured in the upper part of the container (2) a cage (6) which encloses the centrifuge (11, 12) and contains at its lower end (9) an upstanding bearing (10) for the centrifuge (11, 12), and that a drive (13) for the centrifuge (11, 12) is mounted in the openable lid (3) of the container (2).

2. Apparatus according to claim 1 characterised in that the drive (13) for the centrifuge (11, 12) comprises a rotatable driver (17) driven about a substantially vertical axis and engageable with the upper end (18) of the basket-like centrifuge (11, 12).

3. Apparatus according to claim 1 or 2 characterised in that the liftable vessel (20) has at its lower end (22) an inlet valve (24) in the form of a non-return valve.

4. Apparatus according to claim 3 characterised in that the inlet valve is a flap valve (24).